# FASCICULE DE BREVET EUROPEEN

(11) **EP 2 469 799 B1**
(45) Date de publication et mention de la délivrance du brevet: **06.02.2019**
(21) Numéro de dépôt: 11194135.7
(22) Date de dépôt: 16.12.2011
(51) Int. Cl.: H04L 29/08, H04L 29/06, G06F 9/46, G06F 9/54

(54) **Procédé d'exécution d'une action par un terminal de communication, terminal, serveur, système de communication et programme d'ordinateur correspondants**
Verfahren zur Ausführung einer Aktion durch ein Kommunikationsendgerät, entsprechendes Endgerät, entsprechender Server, entsprechendes Kommunikationssystem und Computerprogrammprodukt
Method for executing an action by a communication terminal, corresponding terminal, server, communication system and computer program

(30) Priorité: 24.12.2010 FR 1061256
(43) Date de publication de la demande: 27.06.2012
(73) Titulaire: Orange, 75015 Paris (FR)
(72) Inventeur: Ditini, Nabil, 22450 TROGUERY (FR); Fontaine, Benoît, 22560 TREBEURDEN (FR); Savina, Bernard, 22300 LANNION (FR)
(74) Mandataire: Vidon Brevets & Stratégie

(56) Documents cités:
- EP-A2- 2 241 976
- AU-A1- 2010 201 466
- US-A1- 2010 281 107
- US-A1- 2010 318 598
- US-A1- 2010 325 199

## Description

### 1. Domaine de l'invention

Le domaine de l'invention est celui de l'exécution et du partage d'applications sur différents terminaux d'un réseau.

L'invention s'inscrit notamment dans un contexte « d'informatique dans le nuage » (de l'anglais « *Cloud computing* ») permettant la déportation sur des serveurs distants de traitements informatiques traditionnellement localisés sur le terminal d'un utilisateur.

### 2. Art antérieur

Le concept « d'informatique dans le nuage » s'impose de plus en plus dans les solutions d'hébergement d'infrastructure informatique.

Ce concept permet à l'utilisateur (particulier, entreprise) d'externaliser ses ressources informatiques (infrastructures, serveurs, réseau, stockage, etc.) ainsi que leurs diverses applications (logiciels de messagerie, de paie, etc.) et à y accéder en ligne et à la demande via le réseau Internet. Ainsi, les ressources, les applications et les données ne se trouvent plus sur un seul dispositif dont les capacités de calcul et de stockage étaient limitées, mais virtuellement dans le « nuage » composé d'un certain nombre de serveurs distants interconnectés aux moyens d'une bande passante de qualité permettant une bonne fluidité du système.

Ainsi, un utilisateur accède à ses applications et ses données hébergées sur un serveur distant au travers d'un « bureau virtuel », via tout terminal connecté au réseau.

Le document US2010/0325199 décrit un périphérique de stockage connecté à un "nuage" (cloud).

Le document US2010/0318598 décrit une méthode de contrôle d'un terminal de communication par un terminal client via un serveur relais.

Le document EP 2 241 976 décrit une architecture scalable de serveurs webs accessibles par un navigateur client.

Actuellement, lorsque l'utilisateur souhaite initier une interaction entre différents terminaux, une installation d'applications dédiées sur chacun des terminaux est nécessaire et est notamment mise en oeuvre par les technologies de communication telles que le WiFi, le Bluetooth®, le protocole UPnP (de l'anglais « *Universal Plug and Play* ») ou encore le protocole « Bonjour » développé par Apple.

Par exemple, pour permettre l'interaction entre une télévision et un smartphone, il faut installer une première application dédiée à cette interaction sur la télévision et installer une deuxième application dédiée à cette même (et seule) interaction sur le smartphone.

Toutefois, il n'existe pas de moyens pour permettre une interaction entre différents types de terminaux sans installation d'une application dédiée à cette interaction.

Il existe donc un besoin pour une nouvelle technique permettant à un premier terminal d'exécuter de manière simple et rapide une application sur un deuxième terminal connecté au même réseau que le premier terminal.

### 3. Exposé de l'invention

L'invention propose une solution nouvelle qui ne présente pas l'ensemble de ces inconvénients de l'art antérieur, sous forme d'un procédé d'exécution d'une action par un terminal exécuteur connecté à un réseau de communication, sur requête d'un terminal initiateur distinct,

connecté au réseau.

Selon l'invention, un tel procédé comprend les étapes suivantes :
- obtention, par le terminal initiateur, d'au moins une information représentative de l'état de connexion au réseau d'un ensemble prédéterminé de terminaux, l'information étant fournie par un serveur apte à communiquer avec l'ensemble prédéterminé de terminaux, dit serveur de médiation ;
- sélection par le terminal initiateur du terminal exécuteur parmi l'ensemble de terminaux, pour l'exécution d'une action, la sélection étant mise en oeuvre à partir de l'information représentative de l'état de connexion ;
- transmission, par le terminal initiateur, au serveur de médiation, d'une requête d'exécution d'une action par le terminal exécuteur, la requête étant ultérieurement traitée par le serveur de médiation afin de transmettre au terminal exécuteur au moins une donnée représentative de l'action à exécuter.

L'invention repose ainsi sur une approche nouvelle et inventive de la communication entre au moins deux terminaux, permettant au terminal initiateur de lancer à distance l'exécution d'une action sur un terminal exécuteur distinct sans se préoccuper de la distance qui les sépare ou de l'installation d'application dédiée sur chaque terminal et pour chaque interaction désirée.

En effet, l'invention ne nécessite pas l'installation d'application dédiée selon le type d'interaction et le type de terminal.

En outre, l'information représentative de l'état de connexion au réseau d'un ensemble prédéterminé de terminaux restitue en temps réel l'état de l'ensemble des terminaux identifiés par un serveur de médiation connecté au réseau.

La communication entre les terminaux est donc améliorée, du fait que l'obtention de cette information permet à l'utilisateur du terminal initiateur de connaître en temps réel l'état de connexion des terminaux susceptibles d'être connectés au réseau et de sélectionner un deuxième terminal, dit terminal exécuteur sur lequel l'utilisateur souhaite exécuter une action.

Par exemple, une telle action pourra consister à ouvrir un document, fermer un document, lancer un service de contenus, démarrer un téléchargement ou un enregistrement ...

Ainsi, un utilisateur d'un terminal initiateur, par exemple un téléphone mobile, peut détecter qu'il existe une connexion entre le serveur de médiation et un deuxième terminal correspondant à un ordinateur, et transmettre au serveur de médiation une requête d'exécution d'une vidéo sur cet ordinateur. Ainsi, l'utilisateur pourra lancer en temps réel une vidéo sur l'ordinateur sans être contraint par la distance qui sépare ces deux terminaux ou être dépendant de contraintes liées à l'installation d'applications dédiées à la diffusion de cette vidéo respectivement sur le téléphone mobile et sur l'ordinateur.

Selon un mode de réalisation de l'invention, une étape préalable d'installation, dans le terminal initiateur, d'un module de gestion de l'information représentative ou des informations représentatives de l'état de connexion au réseau d'un ensemble prédéterminé de terminaux.

La phase préalable d'installation du module de gestion de l'information représentative de l'état de connexion au réseau permet d'adapter, en fonction du type de terminal, l'affichage d'une interface graphique, par exemple une interface graphique Web, présentée à l'utilisateur. Ainsi, quelle que soit l'interaction, ou le type de terminal, l'affichage sera toujours adapté et permettra notamment de présenter l'état de connexion d'un ensemble prédéfini de terminaux, à partir duquel l'utilisateur choisit le terminal distant sur lequel il désire que l'action choisie soit exécutée.

Selon un mode de réalisation de l'invention, une étape de mise à jour de l'information représentative ou des informations représentatives de l'état de connexion au réseau d'un ensemble prédéterminé de terminaux, est mise en oeuvre par le serveur de médiation, préalablement à l'étape d'obtention mise en oeuvre par le terminal initiateur.

Ce mode de réalisation permet au terminal initiateur de recevoir au moins une information représentative de l'état de connexion au réseau d'un ensemble prédéterminé de terminaux actualisée en temps réel et reflétant l'état de l'ensemble des terminaux reliés au serveur de médiation. Ainsi, l'utilisateur sera informé en temps réel et pourra désigner le terminal le plus adapté à l'action à exécuter.

Selon une caractéristique particulière de l'invention, le terminal exécuteur met en oeuvre une étape de réception et de traitement de la donnée représentative ou des données représentatives de l'action à exécuter.

Le terminal exécuteur reçoit en effet du serveur de médiation une donnée représentative de l'action à exécuter. Après traitement de cette donnée, l'action est exécutée. L'avantage du procédé selon l'invention est donc de permettre l'exécution à distance d'une action sur un terminal sans aucune contrainte de distance ou d'installation d'application dédiée à l'action à exécuter.

Selon une variante particulière de l'invention, le terminal exécuteur met en oeuvre une étape d'obtention, auprès d'un équipement du réseau de communication, de ressources requises pour l'exécution de l'action.

Selon cette variante, le traitement de la donnée représentative délivre par exemple un lien de téléchargement sur un serveur distant connecté au réseau. Le terminal exécuteur peut ainsi obtenir au moment où il en a besoin les ressources nécessaires à l'exécution de l'action. Ainsi, le terminal exécuteur n'est pas surchargé en permanence par des ressources qu'il peut avantageusement obtenir seulement au moment de l'exécution de l'action.

Selon une autre variante particulière de l'invention, les ressources requises sont transmises audit terminal exécuteur par le terminal initiateur.

Selon cette variante, le terminal initiateur fournit directement les ressources requises pour l'exécution de l'action. Cette variante permet notamment d'accélérer l'exécution de l'action par le terminal exécuteur.

L'invention concerne également un terminal susceptible d'être connecté à un réseau de communication.

Selon l'invention, un tel terminal comprend :
- des moyens d'obtention d'au moins une information représentative de l'état de connexion au réseau d'un ensemble prédéterminé de terminaux, l'information étant fournie par un serveur apte à communiquer avec l'ensemble prédéterminé de terminaux, dit serveur de médiation ;
- des moyens de sélection d'un terminal parmi l'ensemble de terminaux, dit terminal exécuteur, pour l'exécution d'une action, la sélection étant mise en oeuvre à partir de l'information d'état de connexion ;
- des moyens de transmission, par le terminal initiateur, au serveur de médiation, d'une requête d'exécution d'une action par le terminal exécuteur, la requête étant ultérieurement traitée par le serveur de médiation afin de transmettre au terminal exécuteur au moins une donnée représentative de l'action à exécuter.

Un tel terminal, dit terminal initiateur, est notamment adapté à mettre en oeuvre les étapes du procédé d'exécution d'une action par un terminal exécuteur connecté au réseau de communication, décrit précédemment.

Un autre aspect de l'invention concerne un serveur susceptible d'être connecté à un réseau de communication.

Selon l'invention, un tel serveur comprend :
- des moyens de réception d'une requête d'obtention d'au moins une information représentative de l'état de connexion au réseau d'un ensemble prédéterminé de terminaux, la requête d'obtention étant émise par un terminal, dit terminal initiateur,
- des moyens de transmission, au terminal initiateur, de l'information,
- des moyens de réception d'une requête (R_{EA}) d'exécution d'une action par un terminal exécuteur sélectionné par le terminal initiateur à partir de l'information,
- des moyens de transmission, au terminal exécuteur, d'au moins une donnée représentative de l'action à exécuter.

Un tel serveur, dit serveur de médiation, est notamment adapté pour communiquer avec un terminal initiateur et un terminal exécuteur selon le procédé d'exécution d'une action décrit précédemment.

Un autre aspect de l'invention concerne également un système de communication comprenant :
- au moins un premier terminal, dit terminal initiateur connecté à un réseau de communication, tel que décrit précédemment,
- au moins un serveur, dit serveur de médiation, connecté au réseau de communication, tel que décrit précédemment, et
- au moins un deuxième terminal, dit terminal exécuteur, connecté au réseau de communication, le terminal exécuteur étant apte à recevoir du serveur de médiation au moins une donnée représentative d'une action à exécuter.

Enfin l'invention concerne un programme d'ordinateur comportant des instructions pour la mise en oeuvre d'un procédé d'exécution d'une action par un terminal exécuteur connecté à un réseau de communication, sur requête d'un terminal initiateur distinct, connecté au réseau tel que décrits précédemment, lorsque ce programme est exécuté par un processeur. L'invention est définie par la revendication de procédé 1, les revendications de dispositifs 7 et 8, la revendication de système 9 et la revendication de programme d'ordinateur 10.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les étapes d'un procédé d'exécution d'une action par un terminal sur requête d'un autre terminal, selon l'invention ;
- la figure 2 illustre un diagramme de séquence des étapes d'un procédé d'exécution d'une action par un terminal sur requête d'un autre terminal, selon un mode de réalisation particulier de l'invention ;
- la figure 3 illustre un exemple de structure simplifiée d'un terminal, selon un mode de réalisation de l'invention ;
- la figure 4 illustre un exemple de structure simplifiée d'un serveur de médiation, selon un mode de réalisation de l'invention ;
- la figure 5 représente un exemple d'architecture d'un système dans lequel le procédé selon l'invention est mis en oeuvre ;
- la figure 6 illustre un schéma général de l'environnement réseau dans lequel le procédé d'exécution d'une action, selon l'invention, est mis en oeuvre.

### 5. Description d'un mode de réalisation de l'invention

### 5.1 Principe général

Le principe général de l'invention repose sur la capacité d'un premier terminal, appelé terminal initiateur, de déclencher l'exécution d'une action sur un deuxième terminal, appelé terminal exécuteur, distinct du terminal initiateur, via un serveur de médiation. Le terminal initiateur communique avec un serveur de médiation et l'utilise comme un « relais » pour le traitement et la transmission de sa requête d'exécution d'une action par le terminal exécuteur.

Ainsi, l'invention permet d'obtenir une amélioration globale de l'exécution d'une action initiée par un terminal sur un autre terminal, sans contrainte liée au débit, à la distance entre les deux terminaux, et sans nécessiter l'installation d'une application dédiée au lancement de l'action.

### 5.2 Description générale d'un mode de réalisation

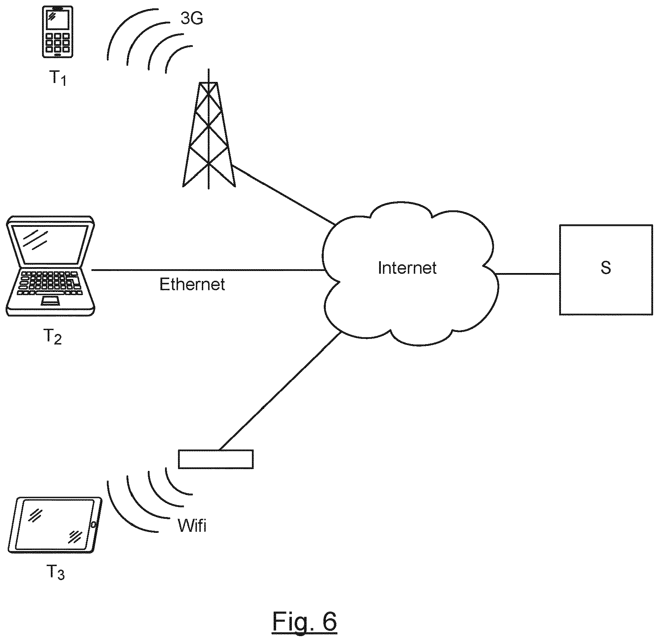

Le procédé selon l'invention, est mis en oeuvre dans un réseau de communication représenté par exemple par **la** **figure 6**. Cet environnement comprend par exemple au moins trois types de terminaux :
- un téléphone mobile, par exemple un smartphone (T1),
- un ordinateur, par exemple un ordinateur portable (T2),
- une tablette tactile multifonction, par exemple un iPad® (T3).

Ces trois terminaux sont connectés au réseau Internet au moyen d'une application Web utilisant respectivement un réseau 3G, un câble Ethernet, ou encore le WiFi. En outre, un serveur de médiation (S) est également connecté au réseau Internet et apte de ce fait à communiquer avec les terminaux précités.

Dans cet environnement réseau, un utilisateur souhaite par exemple depuis son téléphone mobile, alors qu'il est en déplacement professionnel, afficher une photo sur l'écran de télévision de son domicile (non représenté sur la figure 6).

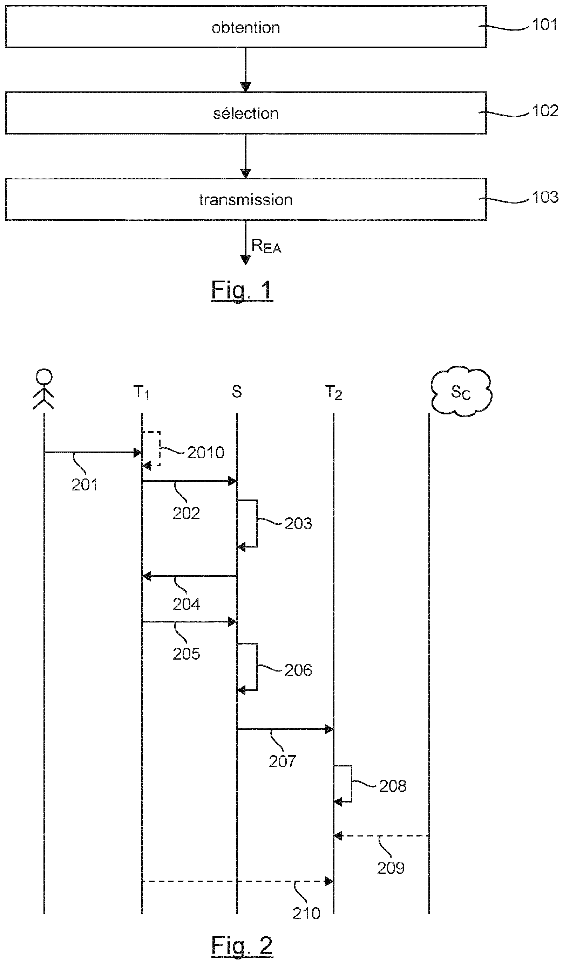

Pour répondre à ce besoin, conformément au procédé selon l'invention, dont les étapes principales sont représentées sur **la** **figure 1**, le téléphone mobile de l'utilisateur commence par obtenir (101) au moins une information représentative de l'état de connexion au réseau d'un ensemble de terminaux prédéterminé. Cet ensemble correspond par exemple aux terminaux avec lesquels l'utilisateur a déjà été en communication, ou encore les terminaux appartenant uniquement à l'utilisateur (par exemple, les terminaux T2 et T3 sur la figure 6).

L'information représentative de l'état de connexion correspond par exemple à une liste de terminaux comprenant des informations indiquant notamment, outre leur état, à savoir, connecté/non-connecté, leur identifiant, leurs ressources disponibles, etc.

Lors de l'étape d'obtention (101) l'utilisateur commence par ouvrir le navigateur Web de son téléphone mobile établissant dès lors une connexion avec un serveur de médiation (S) à travers le réseau Internet.

Plus précisément, lors de cette étape d'ouverture du navigateur Web, le téléphone mobile met en oeuvre une phase de chargement d'une application Web et transmet ensuite à un serveur de médiation, via Internet, une requête d'obtention d'une information représentative de l'état de connexion au réseau d'un ensemble de terminaux prédéterminé, cette information correspondant par exemple à une liste de terminaux.

Le serveur de médiation fournit en retour au téléphone mobile (T1), désigné par "terminal initiateur", l'information représentative de l'état de connexion au réseau de l'ensemble de terminaux, sous forme par exemple d'une liste.

Le terminal initiateur réceptionne l'information représentative de l'état de connexion au réseau de l'ensemble de terminaux, fournie par le serveur de médiation.

Plus précisément, lors de cette étape de réception, l'application Web du terminal initiateur restitue, via une interface graphique, à l'utilisateur un menu présentant une liste des terminaux connectés au serveur de médiation.

Au vu de cette information représentant l'état de connexion au réseau des terminaux, l'utilisateur du terminal initiateur sélectionne (102) le terminal sur lequel il souhaite exécuter l'action, par exemple le téléviseur de son domicile. Le terminal sélectionné est désigné dans le contexte de la présente invention par "terminal exécuteur".

Une fois cette sélection effectuée, le terminal initiateur met en oeuvre une étape de transmission (103) au serveur de médiation d'une requête d'exécution de l'action (R_{EA}) par le terminal exécuteur.

Cette requête d'exécution d'action (R_{EA}) est traitée par le serveur de médiation afin de transmettre ensuite au terminal exécuteur au moins une donnée représentative de l'action à exécuter.

De cette façon, le procédé selon l'invention permet de déclencher à distance à partir d'un premier terminal, une action sur un second terminal, par l'intermédiaire d'un serveur de médiation.

### 5.3 Description détaillée d'un mode de réalisation

De manière générale, selon l'invention, lorsqu'un terminal donné se connecte au réseau, ce terminal envoie, via une requête WS (WebSocket) l'information de connexion au serveur de médiation. Le serveur met à jour localement (c'est-à-dire dans un espace mémoire dédié du serveur) l'état de connexion de l'ensemble des terminaux susceptibles d'être connectés, puis envoie à l'ensemble des terminaux 'connectés' une requête WS invitant ces terminaux à demander la mise à jour de l'information d'état de connexion de l'ensemble des terminaux. Chaque terminal connecté recevant l'invitation précitée, envoie alors une requête HTTP destinée à récupérer auprès du serveur, l'information relative à l'état actualisé de connexion des terminaux. Le serveur envoie alors, à chaque terminal demandeur, l'information précitée sous forme de données au format XML.

Lorsqu'un terminal ne répond pas, suite à l'envoi par le serveur de médiation de la requête invitant les terminaux 'connectés' à demander la mise à jour de l'information d'état de connexion, le serveur de médiation peut ainsi en déduire que le terminal qui ne répond pas est déconnecté. En conséquence, le serveur met à nouveau à jour localement l'information d'état de connexion des terminaux, et envoie à nouveau à l'ensemble des terminaux 'connectés' une invitation à demander la mise à jour de l'information d'état de connexion, comme expliqué ci-dessus.

On présente en relation avec la **figure 2** un exemple de mise en oeuvre du procédé d'exécution selon l'invention, illustré sous forme d'un diagramme de séquence.

Ainsi, l'utilisateur choisit (201) sur son terminal T1, dit terminal initiateur, par exemple un téléphone mobile, l'action qu'il souhaite effectuer, par exemple l'ouverture d'un document correspondant à une image. A cette fin, l'utilisateur « clique » à l'aide d'une souris, par exemple, sur l'image choisie, ce qui provoque l'affichage d'un menu sur l'écran du téléphone mobile, ce menu offrant le choix entre « *ouvrir l'image* » ou « *ouvrir l'image sur un autre terminal ».* L'utilisateur choisit alors « *ouvrir sur un autre terminal* ». Ce choix entraîne en conséquence la transmission (202) d'une requête précitée d'obtention d'une information représentative de l'état de connexion au réseau d'un ensemble de terminaux.

### 5.3.1 Description détaillée de l'étape d'obtention

Selon l'exemple de la figure 2, cette requête d'obtention d'une information représentative de l'état de connexion au réseau d'un ensemble de terminaux, est transmise au serveur de médiation (S).

Selon un aspect particulier de l'invention, le terminal initiateur transmet la requête au serveur de médiation via un canal bidirectionnel full-duplex (permettant une transmission d'information dans les deux sens) en utilisant le protocole WebSocket (protocole standardisé).

L'utilisation du protocole WebSocket permet notamment l'envoi de données en mode « poussé » (*push* en anglais) du serveur vers un terminal donné (initiateur ou exécuteur), sans que ce dernier n'ait effectué de requête préalable.

Pour ce faire, le terminal initiateur (T1) de l'utilisateur est doté d'une interface de type Javascript/HTML5/CSS3 et d'un composant JavaScript qui permet d'envoyer au serveur une requête WebSocket. Le composant JavaScript permet également de gérer l'affichage de l'interface Web présentée à l'utilisateur via le navigateur web (encore désigné par navigateur Internet) du terminal initiateur, et délivre un identifiant du terminal initiateur. Cet identifiant est basé sur la reconnaissance du style d'affichage utilisé par le terminal initiateur, la gestion de feuilles de style (de l'anglais « *Cascading Style Sheets* ») d'une application Web dépendant en effet du type de terminal.

Si le terminal initiateur ne dispose pas de ce composant, le procédé selon l'invention met en oeuvre une phase préalable d'installation (2010) d'un module de gestion de l'information représentative de l'état de connexion au réseau. Ce module contient notamment le composant Javascript, précédemment mentionné, en charge de la gestion de l'affichage d'une interface graphique Web, présentée à l'utilisateur via le navigateur web du terminal initiateur.

Le serveur de médiation (S) réceptionne la requête d'obtention du terminal initiateur, comprenant notamment son identifiant, et procède à son traitement (203). Lors de ce traitement, le serveur de médiation identifie le terminal initiateur (T1) de l'utilisateur grâce à l'identifiant.

Puis, le serveur de médiation notifie (action non représentée), par exemple via une requête WS (WebSocket) transmises aux autres terminaux et/ou équipements connectés, la modification de la liste de terminaux connectés qui est affichée sur chacun d'entre eux. Cette modification correspond à la mise à jour de la liste de terminaux connectés avec la prise en compte notamment de la connexion du terminal initiateur (T1) et de la connexion ou déconnexion, au même moment, de tout autre terminal.

Le serveur de médiation transmet (204) ainsi au terminal initiateur (T1), comme aux autres terminaux, l'information représentative de l'état de connexion au réseau de l'ensemble de terminaux auquel le serveur de médiation est connecté.

Le terminal initiateur T1 - un téléphone mobile selon l'exemple étudié ici - reçoit l'information représentative de l'état de connexion de l'ensemble de terminaux.

Grâce au module de gestion de l'information représentative de l'état de connexion, ce module comprenant le composant Javascript précédemment décrit, l'information représentative de l'état de connexion au réseau de l'ensemble de terminaux, est adaptée graphiquement afin de correspondre au style et aux capacités d'affichage du terminal initiateur.

Par exemple, à la réception de l'information d'état de connexion, l'application Web équipant le terminal initiateur restitue alors, de manière graphique, un menu affichant une liste des terminaux connectés.

De même, chaque terminal, autre que le terminal initiateur, connecté au serveur de médiation récupère des données au format XML destinées à la mise à jour de l'état de connexion des autres terminaux (action non représentée).

Ainsi, grâce à l'invention le terminal initiateur peut recevoir une information représentative de l'état de connexion au réseau d'un ensemble de terminaux prédéterminé, actualisée en temps réel et reflétant l'état de l'ensemble des terminaux reliés au serveur de médiation. En outre, cette information est adaptée afin d'être restituée selon le style d'affichage du terminal initiateur.

En conséquence, l'utilisateur en sera informé en temps réel et pourra désigner le terminal le plus adapté pour l'action qu'il désire exécuter.

### 5.3.2 Description détaillée des étapes de sélection et de transmission de la requête d'exécution

Grâce à l'information représentative de l'état de connexion au réseau d'un ensemble de terminaux prédéterminé, l'utilisateur sélectionne alors le terminal (T2) sur lequel il souhaite effectuer l'action, par exemple afficher une image sur l'ordinateur d'un membre de sa famille.

Toujours en référence à la figure 2, le terminal (T1), à savoir le téléphone mobile selon l'exemple étudié ici, transmet (205) ainsi une requête d'exécution d'une action par le terminal exécuteur (T2).

Selon un exemple de réalisation, cette action correspond à l'envoi de la requête suivante : *message*|*action*=*open&doctId*=*22548&recipient*=*Durand0024&deviceId*=*PC3*
dans laquelle les variables *action, doctId, recipient,* et *deviceId* sont définies comme suit :
*action*: action à effectuer sur le document (*open, close*)
*doctId*: identifiant (utilisé par le serveur de médiation) du document à ouvrir, ce document est hébergé dans le serveur de médiation ou sur un autre équipement (Sc) disposant d'un espace de stockage accessible par le serveur de médiation ou par le terminal désigné.
*recipient*: identifiant de l'utilisateur à qui est destiné l'ouverture du document.
*deviceId*: identifiant (utilisé par le serveur de médiation) du terminal sur lequel le document sera ouvert.

Le serveur de médiation reçoit cette requête et procède à son traitement (206). Cet aspect de l'invention permet notamment de traiter les informations contenues dans la requête d'exécution d'une action par un terminal exécuteur. En effet, le serveur de médiation stocke en mémoire le type d'action à exécuter, l'identifiant du terminal exécuteur sélectionné par le terminal initiateur, ainsi que les autres paramètres éventuels de la requête telle que décrite ci-dessus.

Pour ce faire, le serveur de médiation est notamment doté d'un module Java (*Servlet*) qui permet de réceptionner du client Web, c'est-à-dire du terminal initiateur (T1), une requête WebSocket de demande d'exécution d'action sur un autre terminal (T2) sélectionné par le terminal initiateur.

Par ailleurs, le serveur de médiation est également doté d'un module de gestion des comptes utilisateurs du service Web (module appelé *Users Manager* dans le cadre de l'invention et implémenté sous forme de *Servlet* Java), et d'un module de gestion d'accès aux documents objets de l'action à exécuter ainsi que le stockage externe de ces documents (module appelé *Docs Manager* dans le cadre de l'invention et implémenté sous forme de *Servlet* Java).

En outre, le serveur de médiation possède un module de gestion de l'état de connexion des terminaux de chaque utilisateur, à chaque connexion un identifiant étant attribué à chaque terminal (module appelé *Devices Manager* et implémenté sous forme de *Servlet* Java, dans le cadre de la présente invention).

Le serveur de médiation utilise alors la connexion bidirectionnelle , établie selon le protocole WebSocket avec le terminal (T2) désigné, dont l'identifiant est par exemple *deviceId PC3* pour l'ordinateur du membre de la famille Durand0024, et lui transmet (207) une donnée représentative de l'action à exécuter, pouvant prendre la forme suivante :
*message*|*action*=*open&doctId*=*22548*

Le terminal exécuteur (T2), par exemple l'ordinateur du membre de la famille de l'utilisateur, reçoit la donnée représentative de l'action à exécuter et l'analyse (208).

A l'issue de cette analyse, le terminal exécuteur (T2) obtient le document qui a l'identifiant 22548, par téléchargement direct (210) à partir du terminal de l'utilisateur ayant requis l'action (terminal initiateur), ou bien par téléchargement à partir du serveur de médiation (S) (action non représentée), ou encore par téléchargement direct (209) à partir d'un autre équipement (S_{c}) proposant un stockage externe.

Finalement, une fois le document obtenu, le terminal « exécuteur » exécute l'action, c'est-à-dire dans cet exemple, affiche l'image identifiée, comme requis par le terminal initiateur.

Ainsi, avec cette invention, l'utilisateur du terminal initiateur, par exemple un téléphone mobile, peut, à n'importe quel moment et de n'importe où, demander l'exécution d'une tâche sur un terminal distant connecté au serveur de médiation, sans installation d'applications dédiées, et en utilisant simplement le réseau, par exemple le réseau Internet.

En outre, avec cette solution, le terminal de l'utilisateur, choisi comme « terminal initiateur » n'est plus inutilement occupé. Par ailleurs, la bande passante nécessaire aux différentes connexions établies respectivement entre le terminal initiateur et le serveur de médiation d'une part, et entre le serveur de médiation et le terminal exécuteur d'autre part, est réduite. En effet, grâce à l'invention, le terminal initiateur transmet simplement une requête d'exécution d'action dont le contenu comprend l'identification de l'action à exécuter et l'identification du terminal exécuteur. Cette requête est ainsi avantageusement « allégée » en termes de quantité de données du fait qu'elle ne contient plus systématiquement l'objet de l'action, par exemple le document à ouvrir.

En outre, les terminaux interagissent sans limites de distance les séparant. Enfin, la solution ne dépend pas du système d'exploitation du terminal considéré, un navigateur Internet récent doté d'un composant Javascript permet l'installation du module de gestion de l'information d'état de connexion et suffit par conséquent à la mise en oeuvre de l'invention.

En outre, cette invention peut être utilisée dans les bureaux virtuels proposant des services *Cloud.* Les utilisateurs s'y connectent avec les divers terminaux qu'ils possèdent : un téléphone mobile, un ordinateur de travail, une télévision connectée à la maison. L'invention permet en particulier aux utilisateurs de faire du partage de documents, et ainsi d'ouvrir un document (une vidéo par exemple) à partir d'un téléphone mobile et d'afficher en temps réel ce document sur l'écran d'une télévision connectée à distance.

De manière générale, l'invention peut être avantageusement appliquée pour exécuter tout type d'actions : ouvrir et fermer un document, lancer un service relatif à un contenu, démarrer un téléchargement ou un enregistrement, partager une séquence vidéo avec sa famille ou ses amis en temps réel, être informé sur son ordinateur de travail de l'identité de la personne qui appelle sur son téléphone mobile, etc.

### 5.4 Structures d'un terminal, d'un serveur de médiation et d'un système de communication selon l'invention

Il est à noter que le procédé de communication selon l'invention est exécuté à l'instigation d'un terminal, ce terminal jouant le rôle « d'émetteur » tandis que le serveur de médiation joue le rôle de « récepteur » et transfère à son tour à un deuxième terminal au moins une donnée représentative de l'action à exécuter.

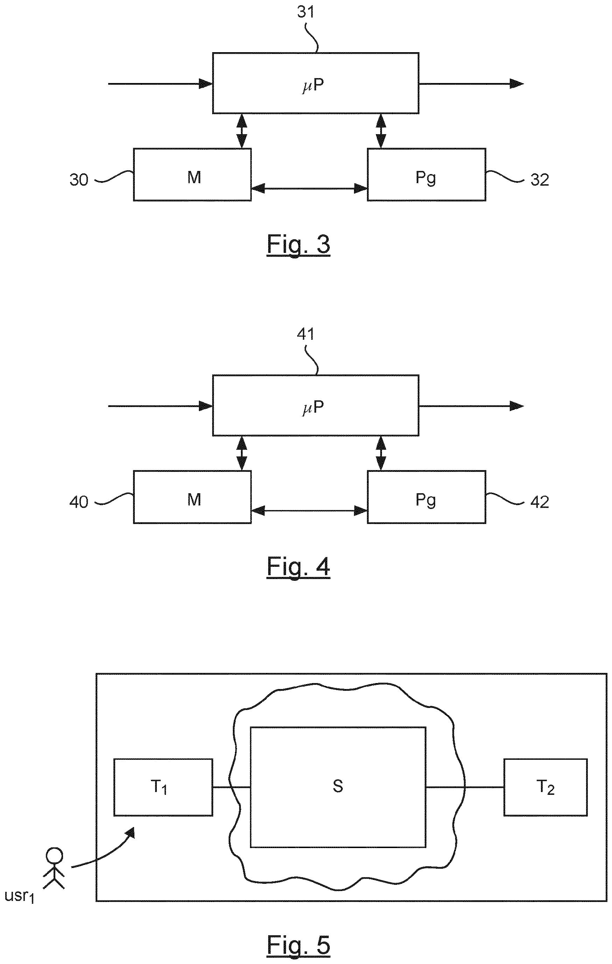

La **figure 3** illustre un exemple de structure simplifiée d'un terminal, dit terminal initiateur, susceptible d'être connecté à un réseau, selon un mode de réalisation de l'invention.

Par exemple, le terminal initiateur comprend une mémoire 30 constituée d'une mémoire tampon, une unité de traitement 31, équipée par exemple d'un microprocesseur µP, et pilotée par le programme d'ordinateur 32, mettant en oeuvre le procédé d'exécution d'une action selon l'invention.

A l'initialisation, les instructions de code du programme d'ordinateur 32 sont par exemple chargées dans une mémoire RAM avant d'être exécutées par le processeur de l'unité de traitement 31. L'unité de traitement 31 reçoit en entrée au moins une requête d'exécution d'une action désirée par un utilisateur. Le microprocesseur de l'unité de traitement 31 met en oeuvre les étapes du procédé d'exécution décrit précédemment, selon les instructions du programme d'ordinateur 32, pour transmettre au terminal exécuteur, via le serveur de médiation, au moins une donnée représentative de l'action à exécuter. Pour cela, le terminal initiateur comprend, outre la mémoire tampon 30 :
- des moyens d'obtention d'une information représentative de l'état de connexion au réseau d'un ensemble prédéterminé de terminaux, l'information étant fournie par un serveur apte à communiquer avec l'ensemble prédéterminé de terminaux, dit serveur de médiation ;
- des moyens de sélection, à partir de l'information d'état de connexion, d'un terminal parmi l'ensemble de terminaux, dit terminal exécuteur, pour l'exécution d'une action;
- des moyens de transmission par le terminal initiateur au serveur de médiation d'une requête d'exécution d'une action par le terminal exécuteur, la requête étant ultérieurement traitée par le serveur de médiation afin de transmettre au terminal exécuteur une donnée représentative de l'action à exécuter.

Ces moyens sont pilotés par le microprocesseur de l'unité de traitement 31.

La **figure 4** illustre un exemple de structure simplifiée d'un serveur de médiation, susceptible d'être connecté à un réseau, selon un mode de réalisation de l'invention.

Par exemple, le serveur de médiation comprend une mémoire 40 constituée d'une mémoire tampon, une unité de traitement 41, équipée par exemple d'un microprocesseur µP, et pilotée par le programme d'ordinateur 42, mettant en oeuvre le procédé d'exécution d'une action selon l'invention.

A l'initialisation, les instructions de code du programme d'ordinateur 42 sont par exemple chargées dans une mémoire RAM avant d'être exécutées par le processeur de l'unité de traitement 41. L'unité de traitement 41 reçoit en entrée au moins une requête d'obtention d'une information représentative de l'état de connexion au réseau d'un ensemble de terminaux prédéterminé. Le microprocesseur de l'unité de traitement 41 met en oeuvre les étapes de « réponse » du serveur de médiation lors de la mise en oeuvre du procédé d'exécution d'une action décrit précédemment, selon les instructions du programme d'ordinateur 42, pour transmettre au deuxième terminal (terminal exécuteur) au moins une donnée représentative de l'action à exécuter. Pour cela, le serveur de médiation comprend, outre la mémoire tampon 40 :
- des moyens de réception d'une requête d'obtention d'une information représentative de l'état de connexion au réseau d'un ensemble prédéterminé de terminaux, la requête d'obtention étant émise par un terminal, dit terminal initiateur,
- des moyens de transmission au terminal initiateur de l'information d'état de connexion,
- des moyens de réception d'une requête d'exécution d'une action par un terminal exécuteur sélectionné par le terminal initiateur à partir de l'information d'état de connexion,
- des moyens de transmission au terminal exécuteur d'au moins une donnée représentative de l'action à exécuter.

Ces moyens sont pilotés par le microprocesseur de l'unité de traitement 41.

La **figure 5** illustre un exemple d'architecture d'un système de télécommunication selon l'invention. Un tel système est mis en oeuvre dans un réseau de communication et comprend au moins un premier terminal T1, dit terminal initiateur, tel que décrit en relation avec la figure 3, au moins un serveur de médiation (S) tel que décrit en relation avec la figure 4 et au moins un deuxième terminal T2, dit terminal exécuteur apte à recevoir et à traiter au moins une donnée représentative d'une action à exécuter fournie par le serveur de médiation.

## Revendications

1. **Procédé** d'exécution d'une action, ladite action étant exécutée par un terminal exécuteur (T2) d'un utilisateur, connecté à un réseau de communication, sur requête d'un terminal initiateur (T1) dudit utilisateur, le terminal initiateur étant distinct du terminal exécuteur, connecté audit réseau, comprenant les étapes suivantes :
- obtention (101), par ledit terminal initiateur (T1), d'au moins une information représentative de l'état de connexion audit réseau d'un ensemble prédéterminé de terminaux dudit utilisateur, ladite information étant fournie par un serveur (S) apte à communiquer avec ledit ensemble prédéterminé de terminaux, dit serveur de médiation (S);
- sélection (102) par ledit terminal initiateur (T1) dudit terminal exécuteur (T2) parmi ledit ensemble de terminaux, pour l'exécution d'une action, ladite sélection étant mise en oeuvre à partir de ladite information représentative de l'état de connexion ;
- transmission (103), par ledit terminal initiateur (T1), audit serveur de médiation (S), d'une requête (R_{EA}) d'exécution d'une action par ledit terminal exécuteur (T2), ladite requête étant ultérieurement traitée (206) par ledit serveur de médiation (S) afin de transmettre audit terminal exécuteur (T2) au moins une donnée représentative de ladite action à exécuter, ladite action à exécuter par ledit terminal exécuteur correspondant à ouvrir un document, ou fermer un document, ou lancer un service de contenus, ou démarrer un téléchargement ou un enregistrement.

2. Procédé selon la revendication 1, comprenant en outre une étape préalable d'installation (2010), dans le terminal initiateur, d'un module de gestion de ladite au moins une information représentative de l'état de connexion audit réseau d'un ensemble prédéterminé de terminaux.

3. Procédé selon la revendication 1, comprenant en outre une étape (203) de mise à jour de ladite au moins une information représentative de l'état de connexion audit réseau d'un ensemble prédéterminé de terminaux, par ledit serveur de médiation (S), ladite étape de mise à jour étant mise en oeuvre préalablement à ladite étape d'obtention.

4. Procédé selon la revendication 1, ledit terminal exécuteur (T2) mettant en oeuvre une étape de réception (207) et de traitement (208) de ladite au moins une donnée représentative de ladite action à exécuter.

5. Procédé selon la revendication 1, ledit terminal exécuteur (T2) mettant en oeuvre une étape d'obtention, auprès d'un équipement (Sc) dudit réseau de communication, de ressources requises pour l'exécution de ladite action.

6. Procédé selon la revendication 5, lesdites ressources requises étant transmises audit terminal exécuteur (T2) par ledit terminal initiateur (T1).

7. **Terminal** (T1) d'un utilisateur, susceptible d'être connecté à un réseau de communication, comprenant :
- des moyens d'obtention d'au moins une information représentative de l'état de connexion audit réseau d'un ensemble prédéterminé de terminaux dudit utilisateur, ladite information étant fournie par un serveur (S) apte à communiquer avec ledit ensemble prédéterminé de terminaux, dit serveur de médiation (S) ;
- des moyens de sélection d'un terminal parmi ledit ensemble de terminaux, dit terminal exécuteur (T2), pour l'exécution d'une action, ladite sélection étant mise en oeuvre à partir de ladite information d'état de connexion ;
- des moyens de transmission, par ledit terminal (T1), audit serveur de médiation (S), d'une requête (R_{EA}) d'exécution d'une action par ledit terminal exécuteur (T2), ladite requête étant ultérieurement traitée par ledit serveur de médiation (S) afin de transmettre audit terminal exécuteur (T2) au moins une donnée représentative de ladite action à exécuter, ladite action à exécuter par ledit terminal exécuteur correspondant à ouvrir un document, ou fermer un document, ou lancer un service de contenus, ou démarrer un téléchargement ou un enregistrement.

8. **Serveur** (S) susceptible d'être connecté à un réseau de communication, comprenant :
- des moyens de réception d'une requête d'obtention d'au moins une information représentative de l'état de connexion audit réseau d'un ensemble prédéterminé de terminaux d'un utilisateur, ladite requête d'obtention étant émise par un terminal dudit utilisateur, dit terminal initiateur (T1),
- des moyens de transmission, audit terminal initiateur (T1), de ladite information,
- des moyens de réception d'une requête (R_{EA}) d'exécution d'une action par un terminal exécuteur (T2) sélectionné par ledit terminal initiateur (T1) à partir de ladite information,
- des moyens de transmission, audit terminal exécuteur (T2), d'au moins une donnée représentative de ladite action à exécuter, ladite action à exécuter par ledit terminal exécuteur correspondant à ouvrir un document, ou fermer un document, ou lancer un service de contenus, ou démarrer un téléchargement ou un enregistrement.

9. **Système de communication** comprenant
- au moins un premier terminal selon la revendication 7, dit terminal initiateur (T1) connecté à un réseau de communication,
- au moins un serveur selon la revendication 8, dit serveur de médiation (S), connecté audit réseau de communication, et
- au moins un deuxième terminal, dit terminal exécuteur (T2), connecté audit réseau de communication, ledit terminal exécuteur (T2) étant apte à recevoir dudit serveur (S) de médiation au moins une donnée représentative d'une action à exécuter, ladite action à exécuter par ledit terminal exécuteur correspondant à ouvrir un document, ou fermer un document, ou lancer un service de contenus, ou démarrer un téléchargement ou un enregistrement.

10. **Programme d'ordinateur** comprenant des instructions pour la mise en oeuvre d'un procédé selon la revendication 1 lorsque ce programme est exécuté par un processeur.

## Patentansprüche

1. Verfahren zur Ausführung einer Aktion, wobei die Aktion auf Anforderung eines auslösenden Endgeräts (T1) des Benutzers von einem mit einem Kommunikationsnetzwerk verbundenen ausführenden Endgerät (T2) eines Benutzers ausgeführt wird, wobei das auslösende Endgerät sich vom mit dem Netzwerk verbundenen ausführenden Endgerät unterscheidet, das die folgenden Schritte enthält:
- Erhalt (101), durch das auslösende Endgerät (T1), mindestens einer für den Verbindungszustand einer vorbestimmten Einheit von Endgeräten des Benutzers mit dem Netzwerk repräsentativen Information, wobei die Information von einem Server (S) geliefert wird, der mit der vorbestimmten Einheit von Endgeräten kommunizieren kann, Vermittlungsserver (S) genannt;
- Auswahl (102), durch das auslösende Endgerät (T1), des ausführenden Endgeräts (T2) unter der Einheit von Endgeräten für die Ausführung einer Aktion, wobei die Auswahl ausgehend von der für den Verbindungszustand repräsentativen Information durchgeführt wird;
- Übertragung (103), durch das auslösende Endgerät (T1), einer Anforderung (R_{EA}) der Ausführung einer Aktion durch das ausführende Endgerät (T2) an den Vermittlungsserver (S), wobei die Anforderung später vom Vermittlungsserver (S) verarbeitet wird (206), um mindestens einen für die auszuführende Aktion repräsentativen Datenwert an das ausführende Endgerät (T2) zu übertragen, wobei die vom ausführenden Endgerät auszuführende Aktion darin besteht, ein Dokument zu öffnen, oder ein Dokument zu schließen, oder einen Inhaltsdienst zu starten, oder einen Download oder eine Aufzeichnung zu beginnen.

2. Verfahren nach Anspruch 1, das außerdem einen vorhergehenden Schritt des Einbaus (2010), in das auslösende Endgerät, eines Verwaltungsmoduls der mindestens einen für den Verbindungszustand einer vorbestimmten Einheit von Endgeräten mit dem Netzwerk repräsentativen Information enthält.

3. Verfahren nach Anspruch 1, das außerdem einen Schritt (203) der Aktualisierung der mindestens einen für den Verbindungszustand einer vorbestimmten Einheit von Endgeräten mit dem Netzwerk repräsentativen Information durch den Vermittlungsserver (S) enthält, wobei der Aktualisierungsschritt vor dem Schritt des Erhalts durchgeführt wird.

4. Verfahren nach Anspruch 1, wobei das ausführende Endgerät (T2) einen Schritt des Empfangs (207) und der Verarbeitung (208) des mindestens einen für die auszuführende Aktion repräsentativen Datenwerts durchführt.

5. Verfahren nach Anspruch 1, wobei das ausführende Endgerät (T2) einen Schritt des Erhalts, bei einer Ausrüstung (Sc) des Kommunikationsnetzwerks, von Ressourcen durchführt, die für die Ausführung der Aktion erforderlich sind.

6. Verfahren nach Anspruch 5, wobei die erforderlichen Ressourcen vom auslösenden Endgerät (T1) an das ausführende Endgerät (T2) übertragen werden.

7. Endgerät (T1) eines Benutzers, das mit einem Kommunikationsnetzwerk verbunden werden kann, das enthält
- Einrichtungen zum Erhalt mindestens einer für den Verbindungszustand einer vorbestimmten Einheit von Endgeräten des Benutzers mit dem Netzwerk repräsentativen Information, wobei die Information von einem Server (S) geliefert wird, der mit der vorbestimmten Einheit von Endgeräten kommunizieren kann, Vermittlungsserver (S) genannt;
- Einrichtungen zur Auswahl eines Endgeräts aus der Einheit von Endgeräten, ausführendes Endgerät (T2) genannt, zur Ausführung einer Aktion, wobei die Auswahl ausgehend von der Verbindungszustandsinformation durchgeführt wird;
- Einrichtungen zur Übertragung, durch das Endgerät (T1), an den Vermittlungsserver (S) einer Anforderung (R_{EA}) der Ausführung einer Aktion durch das ausführende Endgerät (T2), wobei die Anforderung später vom Vermittlungsserver (S) verarbeitet wird, um an das ausführende Endgerät (T2) mindestens einen für die auszuführende Aktion repräsentativen Datenwert zu übertragen, wobei die vom ausführenden Endgerät auszuführende Aktion dem Öffnen eines Dokuments, oder dem Schließen eines Dokuments, oder dem Start eines Inhaltsdiensts oder dem Beginn eines Downloads oder einer Aufzeichnung entspricht.

8. Server (S), der mit einem Kommunikationsnetzwerk verbunden werden kann, der enthält
- Einrichtungen zum Empfang einer Anforderung des Erhalts mindestens einer für den Verbindungszustand einer vorbestimmten Einheit von Endgeräten eines Benutzers mit dem Netzwerk repräsentativen Information, wobei die Anforderung des Erhalts von einem Endgerät des Benutzers, auslösendes Endgerät (T1) genannt, gesendet wird,
- Einrichtungen zur Übertragung der Information an das auslösende Endgerät (T1),
- Einrichtungen zum Empfang einer Anforderung (R_{EA}) der Ausführung einer Aktion durch ein ausführendes Endgerät (T2), das vom auslösenden Endgerät (T1) ausgehend von der Information ausgewählt wird,
- Einrichtungen zur Übertragung, an das ausführende Endgerät (T2), mindestens eines für die auszuführende Aktion repräsentativen Datenwerts, wobei die durch das ausführende Endgerät auszuführende Aktion dem Öffnen eines Dokuments, oder dem Schließen eines Dokuments, oder dem Start eines Inhaltsdiensts oder dem Beginn eines Downloads oder einer Aufzeichnung entspricht.

9. Kommunikationssystem, das enthält
- mindestens ein erstes Endgerät nach Anspruch 7, auslösendes Endgerät (T1) genannt, das mit einem Kommunikationsnetzwerk verbunden ist,
- mindestens einen Server nach Anspruch 8, Vermittlungsserver (S) genannt, der mit dem Kommunikationsnetzwerk verbunden ist, und
- mindestens ein zweites Endgerät, ausführendes Endgerät (T2) genannt, das mit dem Kommunikationsnetzwerk verbunden ist, wobei das ausführende Endgerät (T2) vom Vermittlungsserver (S) mindestens einen Datenwert empfangen kann, der für eine auszuführende Aktion repräsentativ ist, wobei die durch das ausführende Endgerät auszuführende Aktion dem Öffnen eines Dokuments, oder dem Schließen eines Dokuments, oder dem Start eines Inhaltsdiensts oder dem Beginn eines Downloads oder einer Aufzeichnung entspricht.

10. Computerprogramm, das Anweisungen zur Durchführung eines Verfahrens nach Anspruch 1 enthält, wenn dieses Programm von einem Prozessor ausgeführt wird.

## Claims

1. Method for executing an action, said action being executed by an executing terminal (T2) of a user, connected to a communications network, upon request from an initiating terminal (T1) of said user, the initiating terminal being distinct from the executing terminal, connected to said network, comprising the following steps:
- acquisition (101), by said initiating terminal (T1), of at least one piece of information representative of the state of connection to said network of a predetermined set of terminals of said user, said information being supplied by a server (S) able to communicate with said predetermined set of terminals, called mediation server (S);
- selection (102) by said initiating terminal (T1) of said executing terminal (T2) from amongst said set of terminals, for the execution of an action, said selection being implemented based on said information representative of the connection state;
- transmission (103), by said initiating terminal (T1), to said mediation server (S), of a request (R_{EA}) for execution of an action by said executing terminal (T2), said request being later processed (206) by said mediation server (S) in order to transmit to said executing terminal (T2) at least one data value representative of said action to be executed, said action to be executed by said executing terminal corresponding to opening a document, or closing a document, or launching a content service, or starting a download or a recording.

2. Method according to Claim 1, furthermore comprising a prior step (2010), in the initiating terminal, for installing a module for managing said at least one piece of information representative of the state of connection to said network of a predetermined set of terminals.

3. Method according to Claim 1, furthermore comprising a step (203) for updating said at least one piece of information representative of the state of connection to said network of a predetermined set of terminals, by said mediation server (S), said updating step being implemented prior to said acquisition step.

4. Method according to Claim 1, said executing terminal (T2) implementing a step for receiving (207) and for processing (208) said at least one data value representative of said action to be executed.

5. Method according to Claim 1, said executing terminal (T2) implementing a step for acquiring, from a piece of equipment (Sc) of said communications network, resources required for the execution of said action.

6. Method according to Claim 5, said required resources being transmitted to said executing terminal (T2) by said initiating terminal (T1).

7. Terminal (T1) of a user, able to be connected to a communications network, comprising
- means of acquiring at least one piece of information representative of the state of connection to said network of a predetermined set of terminals of said user, said information being supplied by a server (S) able to communicate with said predetermined set of terminals, called mediation server (S);
- means for selecting a terminal, called executing terminal (T2), for the execution of an action, from amongst said set of terminals, said selection being implemented based on said connection state information;
- means of transmission, by said terminal (T1), to said mediation server (S), of a request (R_{EA}) for execution of an action by said executing terminal (T2), said request being processed later on by said mediation server (S) in order to transmit at least one data value representative of said action to be executed to said executing terminal (T2), said action to be executed by said executing terminal corresponding to opening a document, or closing a document, or launching a content service, or starting a download or a recording.

8. Server (S) able to be connected to a communications network, comprising
- means for receiving a request for the acquisition of at least one piece of information representative of the state of connection to said network of a predetermined set of terminals of a user, said acquisition request being generated by a terminal of said user, called initiating terminal (T1),
- means of transmission of said information to said initiating terminal (T1),
- means for receiving a request (R_{EA}) for execution of an action by an executing terminal (T2) selected by said initiating terminal (T1) based on said information,
- means of transmission, to said executing terminal (T2), of at least one data value representative of said action to be executed, said action to be executed by said executing terminal corresponding to opening a document, or closing a document, or launching a content service, or starting a download or a recording.

9. Communications system comprising:
- at least a first terminal according to Claim 7, called initiating terminal (T1) connected to a communications network,
- at least one server according to Claim 8, called mediation server (S), connected to said communications network, and
- at least a second terminal, called executing terminal (T2), connected to said communications network, said executing terminal (T2) being able to receive from said mediation server (S) at least one data value representative of an action to be executed, said action to be executed by said executing terminal corresponding to opening a document, or closing a document, or launching a content service, or starting a download or a recording.

10. Computer program comprising instructions for the implementation of a method according to Claim 1 when this program is executed by a processor.
